(19) **Europäisches Patentamt**
**European Patent Office**
**Office européen des brevets**

(11) **EP 4 416 473 B1**

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **22801820.6**

(22) Anmeldetag: **14.10.2022**

(51) Internationale Patentklassifikation (IPC):
***G01K 3/10*** *(2006.01)* ***H02B 13/065*** *(2006.01)*

(52) Gemeinsame Patentklassifikation (CPC):
**G01K 3/10;** H02B 13/065

(86) Internationale Anmeldenummer:
**PCT/EP2022/078672**

(87) Internationale Veröffentlichungsnummer:
**WO 2023/094075 (01.06.2023 Gazette 2023/22)**

(54) **VERFAHREN ZUM BETREIBEN EINER SCHALTANLAGE UND SCHALTANLAGE**

METHOD FOR OPERATING SWITCHGEAR, AND SWITCHGEAR

PROCÉDÉ D'UTILISATION D'UN APPAREILLAGE DE COMMUTATION ET APPAREILLAGE DE COMMUTATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.11.2021 DE 102021213293**

(43) Veröffentlichungstag der Anmeldung:
**21.08.2024 Patentblatt 2024/34**

(73) Patentinhaber: **Siemens Aktiengesellschaft**
**80333 München (DE)**

(72) Erfinder:
• **AUMANN, Erhard**
**67550 Worms (DE)**
• **MLADENOVIC, Ivana**
**90556 Seukendorf (DE)**
• **SCHÖNAU, Maximilian**
**96450 Coburg (DE)**

(74) Vertreter: **Siemens Patent Attorneys**
**Postfach 22 16 34**
**80506 München (DE)**

(56) Entgegenhaltungen:
CN-A- 109 406 004     CN-A- 111 562 477
DE-A1- 102014 102 509     DE-A1- 102019 204 307
US-A1- 2017 148 300

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Verfahren zum Betreiben einer Schaltanlage und Schaltanlage Die Erfindung bezieht sich auf eine Schaltanlage, insbesondere für Mittel- und/oder Hochspannungen.

Eine häufig in Erscheinung tretende Fehlerquelle in einer Schaltanlage stellen die in der Schaltanlage befindlichen Schraubverbindungen dar, insbesondere solche, die erst auf der Baustelle montiert werden. Die Verschraubung an der Sammelschiene und am Hochspannungskabel spielen dabei eine wichtige Rolle. Diese Schraubverbindungen können sich im Laufe des Betriebes verschlechtern, wodurch eine zusätzliche lokale Erwärmung entsteht, die schließlich zu einem Fehler führen kann. Eine frühzeitige Identifikation einer solchen Fehlerstelle kann zur vorrausschauenden Fehlerbehebung eingesetzt werden.

Aus der US 2017/0148300 A1 und aus der DE 10 2019 204 307 A1 ist bekannt, Werte für die absolute Temperatur zwischen den einzelnen Phasen der Schaltanlage zu vergleichen, um einen möglichen Defekt zu erkennen. Dabei wird angenommen, dass ein solcher Defekt bei nur einer Phase auftritt.

Ebenso ist bekannt, die Temperaturerhöhung gegenüber der Umgebungstemperatur mit dem quadratischen Strom mit einer linearen Gleichung in Bezug zu setzen. Anschließend wird zur Zustandsbewertung die Änderung der linearen Gleichung betrachtet.

Nachteilig an den bekannten Verfahren ist, dass Vergleiche der Temperatur zwischen Phasen eine symmetrische Strombelastung voraussetzen und der Einfluss mancher Fehler auf die absolute Temperatur gering ist, sodass die Fehlererkennung schwierig ist.

Es ist Aufgabe der Erfindung, ein verbessertes Verfahren zur Zustandsbestimmung für eine Schaltanlage und eine entsprechende verbesserte Schaltanlage anzugeben.

Diese Aufgabe wird durch eine Schaltanlage mit den Merkmalen von Anspruch 1 gelöst.

Bei dem erfindungsgemäßen Betriebsverfahren für eine Schaltanlage werden Signale von zwei in der Schaltanlage angeordneten Temperatursensoren aufgenommen. Weiterhin wird durch einer Funktion, die ein Verhältnis der Verläufe der Temperaturen bei den Temperatursensoren modelliert, an die Signale ein Verhältnis zweier thermischer Zeitkonstanten für Temperaturänderungen an den Temperatursensoren ermittelt. Schließlich wird ein Alarmsignal erzeugt, wenn das Verhältnis der thermischen Zeitkonstanten in einem Fehlerbereich liegt.

Die erfindungsgemäße Schaltanlage umfasst einen Temperatursensor und eine Auswerteeinrichtung, wobei die Auswerteeinrichtung ausgestaltet ist, das Verfahren durchzuführen. Die Auswerteeinrichtung ist also ausgestaltet, Signale von zwei in der Schaltanlage angeordneten Temperatursensoren aufzunehmen, durch eine Funktion, die ein Verhältnis der Verläufe der Temperaturen bei den Temperatursensoren modelliert, an die Signale ein Verhältnis zweier thermischer Zeitkonstanten für Temperaturänderungen an den Temperatursensoren zu ermitteln und ein Alarmsignal zu erzeugen, wenn das Verhältnis der thermischen Zeitkonstanten in einem Fehlerbereich liegt.

Bei der Schaltanlage kann es sich um eine luftisolierte Schaltanlage (AIS) oder um eine gasisolierte Schaltanlage (GIS).

Vorteilhaft werden also bei der vorliegenden Erfindung nicht die Absolutwerte von Temperaturen verglichen, sondern es werden Zeitkonstanten betrachtet, mit denen eine Anpassung der Temperatur nach einer Änderung der thermischen Einflüsse, insbesondere nach einer Stromänderung, stattfinden. Dadurch, dass diese mit einem Fit an eine Funktion ermittelt werden, werden automatisch Signalrauschen und andere statistische Einflüsse minimiert. Weiterhin sind die Zeitkonstanten auch bei kleinen Änderungen der thermischen Einflüsse sichtbar und nicht abhängig davon, dass die Strombelastung verschiedener Phasen symmetrisch ist.

Besonders vorteilhaft ist bei diesem Verfahren, dass durch die Bildung des Verhältnisses der beiden betrachteten Zeitkonstanten zwei Einflussfaktoren vernachlässigt werden können, nämlich die Umgebungstemperatur und die elektrischen Verluste der Schaltanlage, die zu der Temperaturänderung führen. Da diese nicht unbedingt bekannt sind oder als Messwerte vorliegen, ergibt sich durch die Betrachtung des Verhältnisses der Zeitkonstanten ein vereinfachter und verbesserter Fitvorgang, der zu verlässlicheren Ergebnissen führt.

Vorteilhafte Ausgestaltungen des erfindungsgemäßen Verfahrens und der erfindungsgemäßen Schaltanlage gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:

Als Fehlerbereich können alle Werte für das Verhältnis der Zeitkonstanten verwendet werden, die weiter als ein Mindestabstand von 1 oder weiter als ein Mindestfaktor von 1 entfernt liegen. Beispielsweise kann der Fehlerbereich alle Verhältnisse umfassen, die außerhalb des Intervalls von 0,8 bis 1,2 liegen; hier beträgt also der Mindestabstand 0,2. Alternativ kann der Fehlerbereich beispielsweise alle Verhältnisse umfassen, die außerhalb des Intervalls von 0,8 bis 1,25 liegen; hier wird ein Mindestfaktor von 0,8 verwendet.

Die Funktion kann den Temperaturverlauf unter der Annahme beschreiben, dass die Temperatursensoren über ein thermisches Netzwerk erster Ordnung mit jeweils einer thermischen Masse und jeweils einem thermischen Widerstand mit einer Umgebungstemperatur verbunden sind, wobei die Umgebungstemperatur in der Funktion unberücksichtigt ist.

Bevorzugt wird auf einen Empfang des Alarmsignals hin eine Sicherheitsmaßnahme durchgeführt. Dabei kann es sich beispielsweise um ein Reduzieren eines durch die Schaltanalage, insbesondere durch eine betroffene Phase fließenden Stromes, ein Abschalten der Schaltanlage oder das Veranlassen einer Wartungsmaßnahme handeln. Beispielsweise kann die Dringlichkeit oder der Grad der Sicherheitsmaßnahme von dem Maß der Abweichung unter den Referenzwert abhängig gemacht werden.

Die Schaltanlage kann eine Phase oder mehrere Phasen, insbesondere drei Phasen umfassen und kann weiterhin einen Temperatursensor für jede Phase umfassen.

Bevorzugt befinden sich die Temperatursensoren in einem thermisch eng gekoppelten System, beispielsweise im Kabelanschlussraum.

Die Temperatursensoren sind bevorzugt ausgebildet, Temperaturen von Schraubenverbindungen zu messen. Sie sind dafür bevorzugt nahe an solchen Schraubenverbindungen angeordnet. Da thermische Zeitkonstanten der thermischen Anpassung bestimmt werden, ist es nicht notwendig, dass die Temperatursensoren direkt an den Schraubverbindungen angeordnet sind, es ist aber zweckmäßig, wenn sie so nahe an diesen angeordnet sind, dass der thermische Einfluss eines Fehlers an der Schraubverbindungen den Einfluss anderer Schraubverbindungen, beispielsweise derjenigen von anderen Phasen, deutlich überwiegt.

Die Temperatursensoren können beispielsweise an einer Sammelschienenverbindung, einer Kabelverbindung, einem oberen Abgang, einem unteren Abgang oder an einer Durchführung angeordnet sein.

Alternativ zu einer Auswertung, also einer Durchführung des Fitvorgangs in der Schaltanlage selbst ist es auch möglich, dass die Schaltanlage mit einem abseits der Schaltanlage, insbesondere als Cloud-Service ausgestalteten Computersystem, gekoppelt ist. Dabei ist die Schaltanlage zweckmäßig ausgestaltet zur Übermittlung der vorhandenen Messwerte, also zumindest des Temperaturverlaufs, an das Computersystem. Das Computersystem wiederum ist ausgestaltet, den Fitvorgang unter Verwendung von wenigstens dem Temperaturverlauf vorzunehmen. Vorteilhaft ist dabei, dass die Daten zentral verarbeitet werden und die Rechen- und Speicherkapazität im Computersystem typischerweise vielfach höher ist als in einer Schaltanlage, da Schaltanlagen üblicherweise bestenfalls mit einem Mikrocontroller ausgestattet sind, wohingegen Computersysteme mit Mikroprozessoren arbeiten.

Im Folgenden wird die Erfindung anhand der in den Figuren dargestellten Ausführungsbeispiele näher beschrieben und erläutert. Es zeigen:

Figur 1    eine luftisolierte Schaltanlage mit einem Temperatursensor,

Figur 2    ein thermisches Modell für die Schaltanlage,

Figur 3    einen T-Stecker einer Schaltanlage mit Platzierungsmöglichkeiten für einen Temperatursensor.

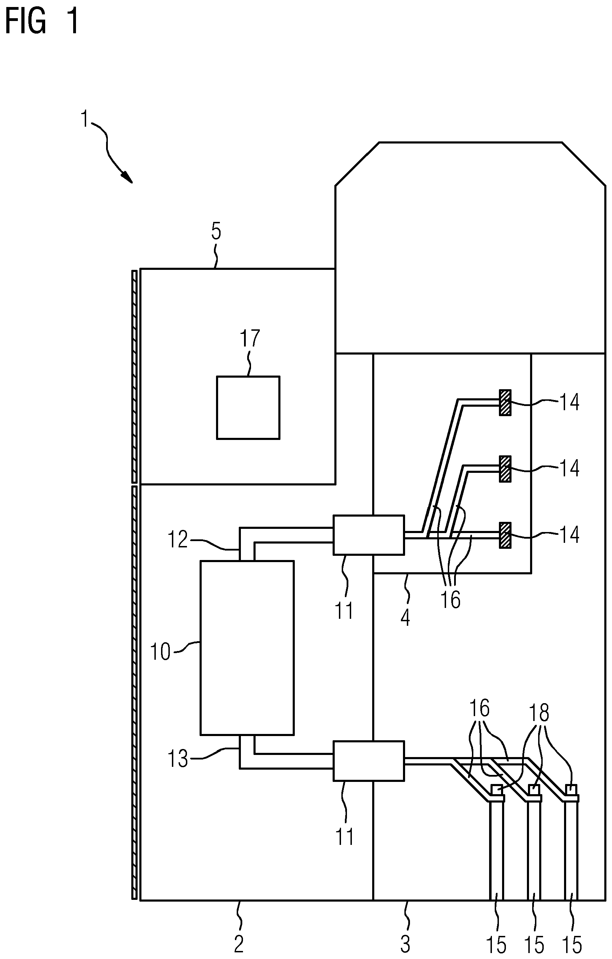

Fig. 1 zeigt ein Ausführungsbeispiel einer Schaltanlage 1 in einer Querschnittsdarstellung. Die Schaltanlage 1 ist vorliegend als luftisolierte Schaltanlage ausgeführt, die Erfindung kann jedoch auch auf gasisolierte oder sonstige Schaltanlagen der Nieder-, Mittel- oder Hochspannungstechnik angewendet werden.

Die Schaltanlage 1 von Fig. 1 besitzt vier verschiedene Räume, die voneinander durch Trennwände abgetrennt sind. Ein Sammelschienenraum 4 beherbergt einen Satz von Sammelschienen 14 (gewöhnlich eine Schiene pro Phase des Energienetzes), über die elektrische Energie zwischen mehreren nebeneinander angeordneten Schaltanlagen verteilt wird. Die jeweiligen Sammelschienenräume 4 können dabei direkt miteinander verbunden sein und somit einen gemeinsamen Sammelschienenraum bilden oder voneinander abgetrennt sein.

Die in dem Sammelschienenraum 4 angeordneten Sammelschienen 14 sind über Verbindungsleiter 16 mit oberen Abgängen 12 eines in einem Geräteraum 2 befindlichen Schaltgerätes 10 verbunden, wobei beispielsweise sogenannte Kontakttulpen oder Fingerkontakte zur Bereitstellung von lösbaren Kontakten für eine einfache Austauschbarkeit des Schaltgerätes 10 verwendet werden können. Als Schaltgerät 10 können beispielsweise Leistungsschalter, Lastschalter, Kurzschließer, Erdungsschalter, Sicherungen und dergleichen mehr zum Einsatz kommen.

Untere Abgänge 13 des Schaltgerätes 10 sind in entsprechender Weise über Verbindungsleiter 16 mit in einem Kabelanschlussraum 3 befindlichen Kabeln 15 verbunden, die als Eingänge oder Ausgänge der von der Schaltanlage 1 verteilten elektrischen Energie dienen können.

Die Verbindungsleiter 16 werden dabei über Durchführungen 11 zwischen dem Geräteraum 2 einerseits und dem Sammelschienenraum 4 beziehungsweise dem Kabelanschlussraum 3 elektrisch mit dem Schaltgerät 10 verbunden.

Ein Niederspannungsraum 5 kann Steuerelektronik, Mess- und Meldegeräte und andere derartige Niederspannungs-Hilfsgeräte aufnehmen. Diese Niederspannungs-Hilfsgeräte können Messwerte von den verschiedenen stromführenden und spannungstragenden Komponenten einlesen und für Steuer- und Schutzzwecke an entfernte Vorrichtungen weiterleiten und/oder lokal anzeigen und/oder automatisiert auswerten. Zur Bereitstellung solcher Messwerte werden üblicherweise an den Sammelschienen und den Kabeln befestigte Strom- und Spannungswandler vorgesehen, deren Messausgänge mit den Niederspannungs-Hilfsgeräte verbunden sind.

Die Verbindungen zwischen den oberen und unteren Abgängen 12, 13 und dem Schaltgerät 10, zwischen den oberen und unteren Abgängen 12, 13 und den Durchführungen 11, zwischen den Durchführungen 11 und den Verbindungsleitern 16 sowie zwischen den Verbindungsleitern 16 und den Sammelschienen 14 beziehungsweise den Kabeln 15 können unter Verwendung von kraftschlüssigen Verbindungen wie Schraub- oder Klemmverbindungen vorgenommen werden. An diesen Punkten kann es daher zu erhöhter Wärmeentwicklung kommen, wenn die Qualität eines derart hergestellten elektrischen Kontaktes zu gering ist.

Daher sind in diesem Beispiel drei Temperatursensoren 18a...c im Kabelanschlussraum 3 in der Nähe von drei analogen Schraubverbindungen, die jeweils Teil einer Phase sind, angeordnet. Die Temperatursensoren 18a...c sind damit sehr nahe an ihrer jeweiligen Schraubverbindung und auch nahe beieinander - im Vergleich zur Größe der Schaltanlage 1 - angeordnet. Die Temperatursensoren 18a...c sind mit einer Auswerteeinheit 17 kommunikativ verbunden, die in diesem Fall als Teil der Schaltanlage 1 gezeigt ist. Die Auswerteeinheit 17 ist vorliegend im Niederspannungsraum 5 angeordnet und kann Teil eines sonstigen Niederspannungs-Hilfsgeräts sein. In anderen Ausführungsformen kann die Funktionalität der Auswerteeinheit 17 auch außerhalb der Schaltanlage 1 angeordnet sein, beispielsweise in einem davon getrennt vorliegenden Computer oder in einem Cloud-Service. In allen Fällen liegt eine wenigstens indirekte Datenverbindung zwischen den Temperatursensoren 18a...c und der Auswerteeinheit 17 vor, durch die Messwerte der Temperatursensoren 18a...c an die Auswerteeinheit 17 übertragen werden können.

Die kommunikative Verbindung zwischen den Temperatursensoren 18a...c und der Auswerteeinheit 17 kann über eine elektrische oder optische Datenleitung, eine drahtlose Kommunikationsverbindung oder über eine Nahfeldkommunikation verwirklicht sein. In letztgenanntem Fall werden die Temperatursensoren 18a...c über nicht dargestellte Antennen im Kabelanschlussraum 3 der Schaltanlage 1 elektromagnetisch angeregt und anhand ihrer Reaktion auf die elektromagnetische Anregung ausgelesen. Dies bietet den Vorteil, dass die Temperatursensoren 18a...c galvanisch getrennt von der Auswerteeinheit 17 und zudem ohne Batterien für die Versorgung einer drahtlosen Kommunikationsverbindung aufgebaut werden können.

Ändert sich der durch die Schaltanlage 1 fließende Strom, dann ändert sich auch die in der Schaltanlage auftretende Verlustleistung gemäß $P_V = I^2 * R$,, wobei I der fließende Strom ist und R die in der Schaltanlage 1 vorhandenen elektrischen Widerstände. Dadurch ändert sich die Temperatur in der Schaltanlage 1, was sich im Sensorsignal der Temperatursensoren 18a...c bemerkbar macht. Die gesamte Schaltanlage 1 bildet dabei ein komplexes thermisches System, in dem sich Temperaturänderungen ausbreiten. Am schnellsten im Signal eines Temperatursensors 18a...c sichtbar sind dabei solche Temperaturänderungen, die nahe beim Temperatursensor 18a...c auftreten, also insbesondere Temperaturänderungen durch die Schraubverbindung, in deren unmittelbarer Nähe der Temperatursensor 18a...c angeordnet ist.

Typische Zeitkonstanten, mit denen sich die Temperatur nach einer Stromänderung anpasst, betragen etwa 1 h. Ist die betrachtete Schraubverbindung fehlerhaft und sorgt für einen erheblichen zusätzlichen Wärmeeintrag, dann äußert sich das in einer verringerten Zeitkonstante der Temperaturänderung.

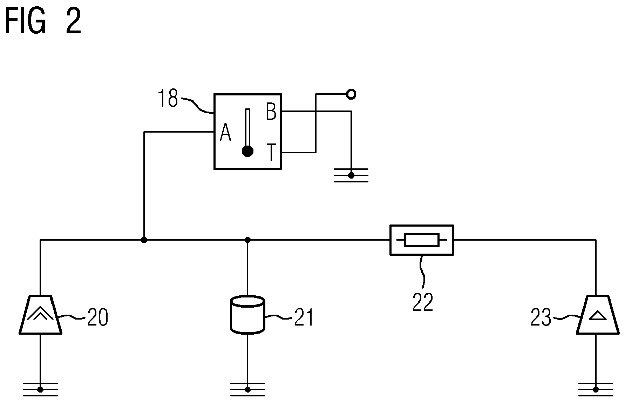

Es ist möglich, die Zeitkonstanten durch eine Auswertung, beispielsweise einen Fit an die Messdaten, zu bestimmen. Der funktionale Zusammenhang ergibt sich dabei aus einem Modell, das in Figur 2 dargestellt ist. Der funktionale Zusammenhang ergibt sich dabei aus einem Modell, das in Figur 2 dargestellt ist. Bei diesem Modell wird die Superposition vieler thermischer Zeitkonstanten und Verlustleistungen zu einer einfachen Modellstruktur mit einer einzelnen Wärmequelle vereinfacht, die über ein thermisches Netzwerk erster Ordnung mit einem RC-Glied aus einer thermischen Masse 21 und einem thermischen Widerstand 22 mit der Außentemperatur 23 als Wärmesenke verbunden ist. Im Fehlerfall wird die Superposition durch die fehlerhafte Schraubverbindung 20 dominiert.

Für das thermische Netzwerk erster Ordnung wie in Figur 2 gezeigt ergibt sich folgender Zusammenhang:

$$T_{Amb}(t) = \tau \cdot \dot{T}(t) + T(t) - P_{Loss}(t) \cdot R$$

Dabei sind $T_{Amb}$ die Umgebungstemperatur 23, T die Temperatur eines jeweiligen Temperatursensors 18a...c, $P_{Loss}$ die auftretende Verlustleistung und R die Größe des thermischen Widerstands 22. Der Parameter $\tau$ ist die gesuchte Zeitkonstante der Temperaturanpassung für diesen Temperatursensor 18a...c. Es ist ersichtlich, dass sich bei konstanter Außentemperatur und konstanter Verlustleistung nach einer stufenförmigen Änderung der Verlustleistung ein exponentieller Verlauf der Temperatur T ergibt. Es kann aber nicht generell davon ausgegangen werden, dass diese Werte konstant sind.

Weiterhin kann auch nicht davon ausgegangen werden, dass die Werte für die Umgebungstemperatur überhaupt bekannt sind. Einerseits kann die Schaltanlage so gestaltet sein, dass sie keinen Sensor dafür aufweist. Andererseits kann die Auswertung auch in manchen Ausführungsformen der Erfindung nicht in der Schaltanlage selbst, sondern beispielsweise in einem Cloud-Server stattfinden, bei dem Messwerte für die Umgebungstemperatur nicht vorliegen, da sie nicht übermittelt werden. Dasselbe gilt für die elektrischen Verluste $P_{Loss}$ der Schaltanlage.

Vorteilhaft wird daher eine Kombination der Zusammenhänge für zwei der Temperatursensoren 18a...c vorgenommen:

$$T_{Amb}(t) = \tau_1 \cdot \dot{T}_{M1}(t) + T_{M1}(t) - P_{Loss}(t) \cdot R_1$$

$$T_{Amb}(t) = \tau_2 \cdot \dot{T}_{M2}(t) + T_{M2}(t) - P_{Loss}(t) \cdot R_2$$

Die Indizes M1 und 1 bezeichnen hierbei die zu einem ersten Temperatursensor 18a...c gehörigen Werte und die Indizes M2 und 2 die zu einem zweiten Temperatursensor 18a...c gehörigen Werte. Nach Umstellen und Normierung auf die jeweilige maximale Temperatur $T_{M1max}$ bzw. $T_{M2max}$ ergibt sich:

$$0 = \frac{\tau_1 \cdot \dot{T}_{M1}(t)}{T_{M1max}} + \frac{T_{M1}(t)}{T_{M1max}} - \left(P_{Loss}(t) + \frac{T_{Amb}(t)}{R_1}\right) \cdot \frac{R_1}{T_{M1max}}$$

$$0 = \frac{\tau_2 \cdot \dot{T}_{M2}(t)}{T_{M2max}} + \frac{T_{M2}(t)}{T_{M2max}} - \left(P_{Loss}(t) + \frac{T_{Amb}(t)}{R_2}\right) \cdot \frac{R_2}{T_{M2max}}$$

Weiteres Umstellen ergibt einen Ausdruck für die Relation der beiden Zeitkonstanten $\tau_1$ und $\tau_2$:

$$\tau_2 = \frac{T_{M2max}}{\dot{T}_{M2}(t)} \cdot \left(\frac{\tau_1 \dot{T}_{M1}(t)}{T_{M1max}} + \frac{T_{M1}(t)}{T_{M1max}} - \frac{T_{M2}(t)}{T_{M2max}} + B\right)$$

$$\tau_2 = \frac{T_{M2max}}{T_{M1max}} \cdot \frac{\dot{T}_{M1}(t)}{\dot{T}_{M2}(t)} \cdot \tau_1 + \frac{T_{M2max}}{\dot{T}_{M2}(t)} \cdot \left(\frac{T_{M1}(t)}{T_{M1max}} - \frac{T_{M2}(t)}{T_{M2max}} + B\right)$$

Mit

$$B = \frac{-\left(P_{Loss}(t) + \frac{T_{Amb(t)}}{R1}\right)}{\left(P_{Loss}(t = t1) + \frac{T_{Amb(t=t1)}}{R_1}\right)} + \frac{\left(P_{Loss}(t) + \frac{T_{Amb(t)}}{R_2}\right)}{\left(P_{Loss}(t = t2) + \frac{T_{Amb(t=t2)}}{R_2}\right)}$$

Durch die Normierung und dem Betrachten der beiden Zeitkonstanten oder der Steigungen zueinander kann dabei der Term B vernachlässigt und trotzdem eine ausreichende Genauigkeit erzielt werden, um Fehlerfälle zu identifizieren. Damit ist keine zusätzliche Strommessung oder Messung der Umgebungstemperatur notwendig, was eine Besonderheit dieses Verfahrens darstellt. Da die Parameter $\tau_1$ und $\tau_2$ unbekannt sind, wird ein Fitvorgang verwendet. Dabei wird nicht jeweils ein eigener Wert für die Parameter $\tau_1$ und $\tau_2$ bestimmt, sondern nur die Relation $\tau_1/\tau_2$. Die Relation ist dabei ein ausreichender Indikator zur vergleichenden Zustandsbestimmung. Die Relation ließe sich auch bestimmen, wenn $\tau_1$ und $\tau_2$ jeweils für sich durch einen Fitvorgang ermittelt werden, dann könnte aber der Term B nicht vernachlässigt werden. Für diesen Fitvorgang muss kein bestimmter Zeitpunkt abgewartet werden, sondern der Fit kann laufend vorgenommen werden in einem rollenden Zeitfenster der Messdaten. Das Verfahren profitiert davon, dass die betrachteten Sensoren durch ihre räumliche Nähe eng gekoppelt sind bezüglich der Umgebungstemperatur.

Das so erhaltene Verhältnis von $\tau_1$ und $\tau_2$ liegt nahe 1, wenn die Schaltanlage 1 keine Fehler in unmittelbarer Nähe der beiden Temperatursensoren 18a...c aufweist, wenn also insbesondere die Schraubverbindungen, bei denen die Temperatursensoren 18a...c angeordnet sind keinen erheblichen Wärmeeintrag verursachen. In diesem Fall sind alle Wärmequellen der Schaltanlage 1 in etwa gleich weit von den beiden Temperatursensoren 18a...c entfernt, da die Temperatursensoren 18a...c nahe beieinander angeordnet sind, beispielsweise an direkt benachbarten Schraubverbindungen. Dadurch wirken sich Stromänderungen in etwa gleich bei beiden Temperatursensoren 18a...c aus und die sich ergebenden Zeitkonstanten sind nahezu gleich, haben also ein Verhältnis von etwa 1.

Ist dagegen eine der Schraubverbindungen fehlerhaft, dann verursacht diese einen Wärmeeintrag. Da dieser Wärmeeintrag nun - im Vergleich zum Abstand der Temperatursensoren 18a...c - sehr nahe an einem der beiden Temperatursensoren 18a...c stattfindet, ist die Wirkung auf die Zeitkonstante der beiden Temperatursensoren 18a...c unterschiedlich und das Verhältnis der Zeitkonstanten weicht nun deutlich von 1 ab. Versuche haben gezeigt, dass die sich ergebenden Verhältnisse beispielsweise bei 0,6 liegen.

Die Größe des Verhältnisses kann daher als Kriterium verwendet werden, ob ein Fehler vorliegt. Dazu wird ein Vergleich des Abstands des Verhältnisses von 1 mit einem vorgegebenen Schwellwert von beispielsweise 0,2 vorgenommen. Wird der Abstand von 1 größer als der Schwellwert, wird ein Alarmsignal ausgelöst und/oder eine Sicherheitsmaßnahme wie eine Abschaltung vorgenommen. Im vorliegenden Beispiel wird also ein Alarmsignal ausgelöst, wenn das Verhältnis größer als 1,2 oder kleiner als 0,8 ist. Alternativ zum Abstand kann auch ein Faktor verwendet werden, um den das Verhältnis von 1 abweicht, damit Fehler bei beiden Schraubverbindungen mathematisch gleich behandelt werden. Wird als Faktor beispielsweise 0,8 verwendet, dann wird ein Alarmsignal ausgelöst, wenn das Verhältnis kleiner als 0,8 oder größer als 1/0,8 = 1,25 ist.

Neben einem Vergleich mit einem absoluten Schwellwert kann auch der Verlauf des ermittelten Verhältnisses betrachtet werden, um einen Fehler zu ermitteln. Steigt oder sinkt das Verhältnis mit der Zeit deutlich, beispielsweise innerhalb einer vorgegebenen Zeitspanne um 10%, kann von einem Fehler ausgegangen werden und somit ein Alarmsignal ausgelöst und/oder eine Sicherheitsmaßnahme wie eine Abschaltung vorgenommen werden.

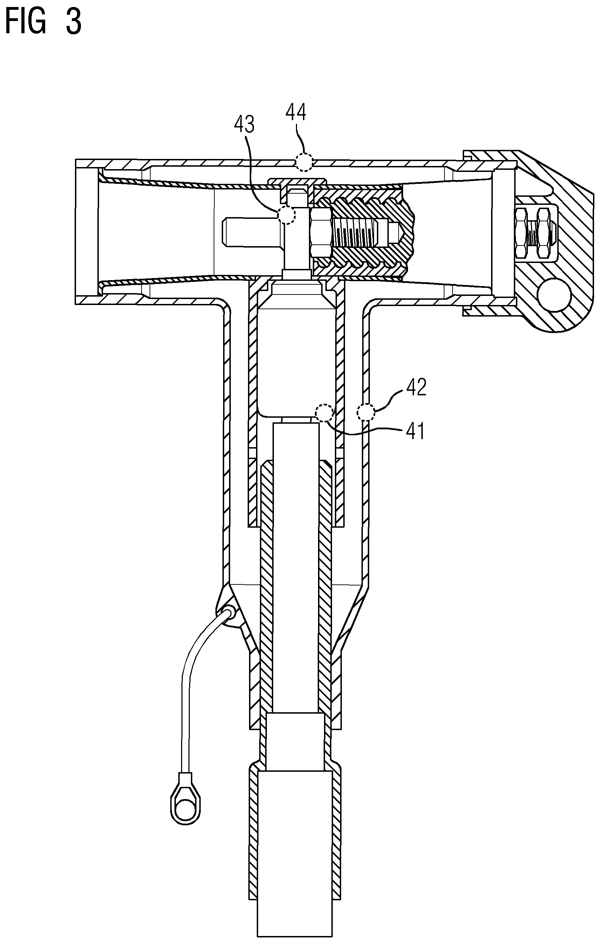

Bei einer gasisolierten Schaltanlage können die Temperatursensoren 18a...c unter anderem in oder an einem T-Stecker angeordnet werden. Figur 3 zeigt einen solchen T-Stecker 40 im Schnittbild mit einer Mehrzahl von möglichen Positionen 41...44 für den Temperatursensor 18a...c. Die Positionen unterschieden sich dabei durch ihre Distanz von der Schraubverbindung und somit der Zeitlichen Reaktion auf Stromänderung. Bei einer Position, die einem möglichen Fehler sehr nahe ist wie beispielsweise Position 43 kann die thermische Reaktion sehr gut mit einem thermischen Netzwerk erster Ordnung beschrieben werden, während bei einer weiter vom Fehler entfernten Position wie der Position 42 ein thermisches Netzwerk zweiter Ordnung den Temperaturverlauf besser darstellt.

Bezugszeichen

| 1 | luftisolierte Schaltanlage |
|---|---|
| 2 | Geräteraum |
| 3 | Kabelanschlussraum |
| 4 | Sammelschienenraum |
| 5 | Niederspannungsraum |
| 10 | Schaltgerät |
| 11 | Durchführungen |
| 12 | oberer Abgang |
| 13 | unterer Abgang |
| 14 | Sammelschiene |
| 15 | Kabel |
| 16 | Verbindungsleiter |
| 17 | Auswerteeinheit |
| 18a...c | Temperatursensor |
| 20 | Schraubverbindung |
| 21 | thermische Masse |
| 22 | thermischer Widerstand |
| 23 | Außentemperatur |
| 40 | T-Stecker |
| 41...45 | Positionen für den Temperatursensor |

Patentansprüche

1.  Verfahren zum Betreiben einer Schaltanlage (1), bei dem

    - Signale von zwei in der Schaltanlage (1) angeordneten Temperatursensoren (18a...c) aufgenommen werden, **dadurch gekennzeichnet, dass**
    - durch einen Fit einer Funktion, die ein Verhältnis der Verläufe der Temperaturen bei den Temperatursensoren (18a...c) modelliert, an die Signale ein Verhältnis zweier thermischer Zeitkonstanten für Temperaturänderungen an den Temperatursensoren (18a...c) ermittelt wird,
- ein Alarmsignal erzeugt wird, wenn das Verhältnis der thermischen Zeitkonstanten in einem Fehlerbereich liegt.

2. Verfahren nach Anspruch 1, bei dem der Fehlerbereich alle Werte für das Verhältnis der Zeitkonstanten umfasst, die weiter als ein Mindestabstand von 1 entfernt liegen.

3. Verfahren nach Anspruch 1 oder 2, bei dem die Funktion den Temperaturverlauf unter der Annahme beschreibt, dass die Temperatursensoren (18a...c) über ein thermisches Netzwerk erster Ordnung mit einer thermischen Masse (21) und einem thermischen Widerstand (22) mit einer Umgebungstemperatur (23) verbunden sind, wobei die Umgebungstemperatur (23) in der Funktion unberücksichtigt ist.

4. Verfahren nach einem der vorangehenden Ansprüche, bei dem auf einen Empfang des Alarmsignals hin eine Sicherheitsmaßnahme durchgeführt wird.

5. Verfahren nach Anspruch 4, bei dem die Sicherheitsmaßnahme ein Reduzieren eines fließenden Stroms, ein Abschalten der Schaltanlage (1) oder das Veranlassen einer Wartungsmaßnahme umfasst.

6. Schaltanlage (1) mit wenigstens zwei Temperatursensoren (18a...c) und einer Auswerteeinrichtung (17), wobei die Auswerteeinrichtung (17) ausgestaltet ist, ein Verfahren nach einem der vorangehenden Ansprüche durchzuführen.

7. Schaltanlage (1) nach Anspruch 6 mit einer Mehrzahl von Phasen oder Schaltfeldern, insbesondere drei Phasen und einem Temperatursensor (18a...c) für jede Phase oder jedes Schaltfeld.

8. Schaltanlage (1) nach Anspruch 6 oder 7, bei der die Temperatursensoren (18a...c) ausgebildet sind, Temperaturen von Schraubenverbindungen zu messen.

9. Schaltanlage (1) nach Anspruch 8, bei der die Temperatursensoren (18a...c) an einer Sammelschienenverbindung, einer Kabelverbindung, einem oberen Abgang (12), einem unteren Abgang (13) oder an einer Durchführung (11) angeordnet sind.

10. System mit einer Schaltanlage (1) und einem abseits der Schaltanlage (1), insbesondere als Cloud-Service ausgestalteten Computersystem, bei dem das Computersystem ausgestaltet ist zur Durchführung eines Verfahrens nach einem der Ansprüche 1 bis 5 und die Schaltanlage (1) ausgestaltet ist zur Übermittlung des Temperaturverlaufs an das Computersystem.

**Claims**

1. Method for operating a switchgear installation (1), in which

   - signals from two temperature sensors (18a...c) arranged in the switchgear installation (1) are recorded,
   **characterized in that**
   - a ratio between two thermal time constants for temperature changes is determined at the temperature sensors (18a...c) by fitting a function, which models a ratio between the curves of the temperatures in the temperature sensors (18a...c), to the signals,
   - an alarm signal is generated when the ratio of the thermal time constants is within a fault range.

2. Method according to Claim 1, in which the fault range includes all values for the ratio between the time constants that are further away than a minimum distance of 1.

3. Method according to Claim 1 or 2, in which the function describes the temperature curve on the assumption that the temperature sensors (18a...c) are connected via a first-order thermal network to a thermal mass (21) and via a thermal resistance (22) to an ambient temperature (23), wherein the ambient temperature (23) is not taken into account in the function.

4. Method according to any one of the preceding claims, in which a safety measure is carried out in response to reception of the alarm signal.

5. Method according to Claim 4, in which the safety measure comprises reducing a flowing current, shutting down the switchgear installation (1) or initiating a maintenance measure.

6. Switchgear installation (1) having at least two temperature sensors (18a...c) and an evaluation device (17), wherein the evaluation device (17) is designed to carry out a method according to any one of the preceding claims.

7. Switchgear installation (1) according to Claim 6 having a plurality of phases or switching panels, in particular three phases, and a temperature sensor (18a...c) for each phase or each switching panel.

8. Switchgear installation (1) according to Claim 6 or 7, in which the temperature sensors (18a...c) are designed to measure temperatures of screw connections.

9. Switchgear installation (1) according to Claim 8, in which the temperature sensors (18a...c) are arranged on a busbar connection, a cable connection, an upper outgoing circuit (12), a lower outgoing circuit (13) or on a bushing (11).

10. System having a switchgear installation (1) and a computer system, designed in particular as a cloud service and separate from the switchgear installation (1), in which the computer system is designed to carry out a method according to any one of Claims 1 to 5 and the switchgear installation (1) is designed to transmit the temperature curve to the computer system.

## Revendications

1. Procédé pour faire fonctionner un appareillage (1) de commutation, dans lequel

   - on enregistre des signaux de deux capteurs (18a...c) de température montés dans l'appareillage (1) de commutation, **caractérisé en ce que**
   - par un fit d'une fonction, qui modélise une relation des courbes des températures aux capteurs (18a...c) de température, on détermine sur les signaux une relation entre deux constantes de temps thermiques pour des variations de température aux capteurs (18a...c) de température,
   - on produit un signal d'alerte, si la relation des constantes de temps thermiques se trouve dans une plage de défaut.

2. Procédé suivant la revendication 1, dans lequel la plage de défaut comprend toutes les valeurs de la relation des constantes de temps, qui sont plus éloignées qu'une distance minimum de 1.

3. Procédé suivant la revendication 1 ou 2, dans lequel la fonction décrit la courbe de température en faisant l'hypothèse que les capteurs (18a...c) de température sont, par un réseau thermique du premier ordre, reliés à une masse (21) thermique et à une résistance (22) thermique ayant une température (23) ambiante, dans lequel la température (23) ambiante n'est pas prise en compte dans la fonction.

4. Procédé suivant l'une des revendications précédentes, dans lequel on prend une mesure de sécurité à la réception du signal d'alerte.

5. Procédé suivant la revendication 4, dans lequel la mesure de sécurité comprend une réduction d'un courant passant, un arrêt de l'appareillage (1) de commutation ou la mise en œuvre d'une mesure d'entretien.

6. Appareillage (1) de commutation comprenant au moins deux capteurs (18a...c) de température et un dispositif (17) d'évaluation, dans lequel le dispositif (17) d'évaluation est conformé pour effectuer un procédé suivant l'une des revendications précédentes.

7. Appareillage (1) de commutation suivant la revendication 6, comprenant une pluralité de phases ou de champs de commutation, en particulier trois phases et un capteur (18a...c) de température pour chaque phase ou chaque champ de commutation.

8. Appareillage (1) de commutation suivant la revendication 6 ou 7, dans lequel les capteurs (18a...c) de température sont constitués pour mesurer les températures de vissage.

9. Appareillage (1) de commutation suivant la revendication 8, dans lequel les capteurs (18a...c) de température sont montés sur une liaison de rail collecteur, une liaison par câble, une sortie (12) supérieure, une sortie (13) inférieure ou une traversée (11).

10. Système comprenant un appareillage (1) de commutation et un système informatique, conformé en particulier en service nuage, en aval de l'appareillage (1) de commutation, dans lequel le système informatique est conformé pour exécuter un procédé suivant l'une des revendications 1 à 5 et l'appareillage (1) de commutation est conformé pour transmettre la courbe de température au système informatique.

FIG 1

FIG 2

# FIG 3

**EP 4 416 473 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170148300 A1

- DE 102019204307 A1